# EUROPEAN PATENT APPLICATION

(11) **EP 2 886 188 A1**
(43) Date of publication of application: **24.06.2015**
(21) Application number: 14199973.0
(22) Date of filing: 23.12.2014
(51) Int. Cl.: B01F 5/00, B01F 5/06, B01F 15/06, C02F 1/00

(54) **Activation device for activating a liquid**

(30) Priority: 23.12.2013 EP 13199412
(71) Applicant: Fedorovskiy, Iosif, 61350 Bad Homburg vor der Höhe (DE)
(72) Inventor: Fedorovskiy, Iosif, 61350 Bad Homburg vor der Höhe (DE)
(74) Representative: Fuchs Patentanwälte Partnerschaft mbB

(57) **Abstract**

The present invention relates to an activation device for activating a liquid, comprising a base body (12) having a central part (14) and a first elongate portion (16) and a second elongate portion (18) protruding from the central part (14), a hollow space (24) located in the central part (14), an inlet channel (26) provided in the first elongate portion (16) in communication with the hollow space (24) for conducting the liquid into the hollow space (24), and an outlet channel (28) provided in the second elongate portion (18) in communication with the hollow space (24) for conducting the liquid out of the hollow space (24), wherein the inlet channel (26) and/or the outlet channel (28) have a helical shape.

## Description

The present invention relates to an activation device for activating a liquid. In the context of the present invention the expression "activating a liquid" is to be understood such that energy, in particular kinetic energy, is added to any given liquid like water, aqueous solutions, dispersions, suspensions or emulsions. There are different reasons why it is beneficial to add energy to a liquid. One of the main reasons is to provide good mixing of two or more different substances, particularly in dispersion and emulsions to reach a colloidal status which means that the two or more different substances remain in a stable and well mixed status and are not prone to separation. Other reasons may be that water or another single liquid may have an increased chemical activity. Fuels to which energy has been added may provide a better combustion. Chalk included in water used for domestic purposes like cleaning or in heating devices as heat carrier may not settle as quickly when energy has been added.

Examples of activation devices are disclosed e.g. in DE 37 38 223, AT 007 821, DE 20 2004 012 440 and DE 20 2011 005 559. The common feature of the devices described in these documents is that the liquid is guided on a helical track so that an angular momentum is imposed to the liquid.

A severe disadvantage of the devices described in the documents mentioned above is that some of them require rotating elements like the device according to DE 37 38 223 or that the devices have to follow very specific geometrical provisions like the device according to DE 20 2011 005 559 which complicates the manufacturing process. Other devices require special materials like a particular kind of metal or magnets or combinations thereof. Moreover, all of them need a fairly big installation space that makes it difficult to integrate these devices into existing systems.

The present invention aims to provide an activation device for activating a liquid that is easy to manufacture using only one type of material, requires little material and is easy to integrate into existing systems.

The task is solved by an activation device for activating a liquid comprising a base body having a central part and a first elongate portion and a second elongate portion protruding from the central part, a hollow space located in the central part, an inlet channel provided in the first elongate portion in communication with the hollow space for conducting the liquid into the hollow space, and an outlet channel provided in the second elongate portion in communication with the hollow space for conducting the liquid out of the hollow space, wherein the inlet channel and/or the outlet channel have a helical shape. The inventive shape of the activation device allows for very compact dimensions albeit providing a high degree of energy that is added to the liquid and in particular a high degree of angular momentum leading to an expansive mixing. Moreover, the degree of energy added to the liquid is independent of the material that is used to manufacture the inventive activation device. Since there are no constraints regarding the material, the manufacturing process can be facilitated. No material combinations need to be adjusted to each other. Moreover, a vortex-like flow can be generated within the hollow space leading to cavitation processes that further improve the mixing processes. There is no need to provoke the cavitation process, e.g., by using ultrasonic or catalytic reactions which facilitates the use of the inventive activation device and may reduce the energy demand.

The inventive activation device is further developed in that the inlet channel has an inlet port and an outlet port, the outlet port leading to the hollow space, wherein the inlet channel has a circular cross-section with a first diameter that is decreasing from the inlet port to the outlet port. Channels with a circular cross-section are easy to manufacture due to its rotational symmetry. Moreover, given that the liquid is an incompressible medium, the first diameter decreasing along the direction of flow leads to an acceleration of the liquid such that the flow rate is increasing. The kinetic energy added to the liquid is therefore increased.

Advantageously, the outlet channel has an inlet port and an outlet port, the inlet port starting from the hollow space, wherein the outlet channel has a circular cross-section with a second diameter that is increasing from the inlet port to the outlet port. In this embodiment the inlet channel and the outlet channel can be manufactured in an identical way which facilitates the manufacturing process. Moreover, the liquid enters and exits the activation device with the same or nearly the same flow rate which reduces the impact of the general flow rate within the system into which the inventive activation device is integrated.

In a preferred embodiment of the inventive activation device the hollow space has a spherical shape. Again, the manufacturing process is facilitated due to the rotational symmetry of the spherical shape. As already mentioned the liquid that enters the hollow space after having passed through the inlet channel has a certain angular momentum. When entering the hollow space the angular momentum is not interrupted by any disturbing edges so that a vortex can build up so that the mixing is further improved.

In another embodiment the activation element comprises a temperature control unit for changing the temperature in the hollow space. In this embodiment energy in the form of heat may be introduced to the liquid. Moreover, mixing processes in particular on molecular scale may be supported by introducing heat to the liquid. However, depending on the liquid to be processed, the desired mixing effects may advantageously be influenced by cooling the liquid. The temperature control unit can be used for both cooling and heating.

Another advantageous embodiment is characterised in that the first elongate portion is provided with a first thread at its distal end and/or that the second elongate portion is provide with a second thread at its distal end. The threads facilitate the integration of the inventive activation device into existing systems, in particular into existing piping systems. Moreover, seals may be provided to tighten the device against the neighbouring piping segments.

Preferably, the activation device is symmetrical with respect to a central point. In this embodiment a very high degree of symmetry is provided which facilitates the manufacturing process. One further effect is that the device can be integrated into an existing piping system irrespective of its mounting direction. Moreover, the direction of flow through the activation device can be changed without affecting the functionality of the device.

In a preferred embodiment the activation device consists of plastics or comprises plastics. Plastics are available in large quantities and varieties so that the activation device can be optimised towards a given application. As an example, certain plastics with hydrophobic surface properties may be better suited for any given emulsion than plastics with hydrophilic surface properties. Moreover, the manufacturing process can be facilitated since extrusion or co-extrusion processes may be applied. By applying these extrusion processes high-quality products with high output rates may be provided at low costs.

In the following the invention is further described by way of a preferred embodiment referring to the attached drawing.

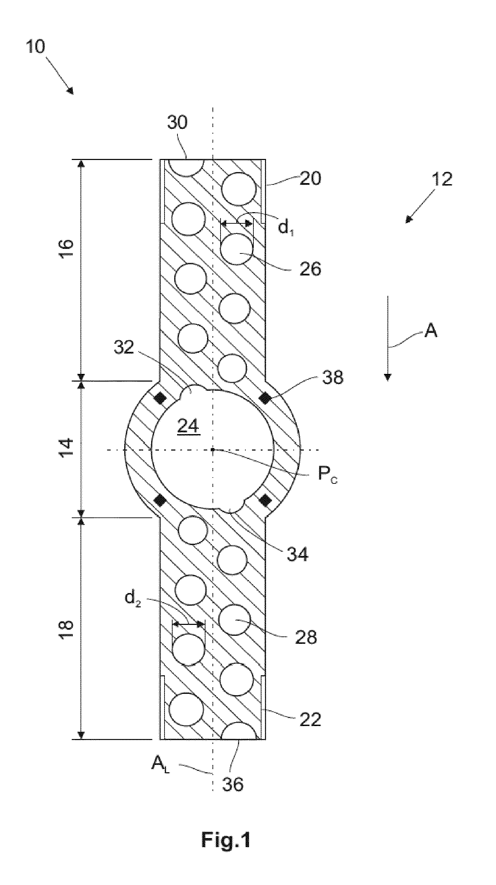

- Figure 1: shows a preferred embodiment of an inventive activation device by means of a cross-sectional view.

In Figure 1 a preferred embodiment of an inventive activation device 10 is shown by means of a cross-sectional view. The activation device 10 comprises a base body 12 having a central part 14 and a first elongate portion 16 and a second elongate portion 18, both arranged around a common longitudinal axis A_{L}. At their distal ends the first elongate portion 16 is provided with a first thread 20 whereas the second elongate portion 18 is provided with a second thread 22. The threads 20, 22 serve for connecting the inventive activation device 10 with neighbouring elements like hoses or pipes.

A hollow space 24 having a spherical shape is located within the central part 14 of the base body 12. An inlet channel 26 is provided within the first elongate portion 16 and an outlet channel 28 is provided within the second elongate portion 18. Both the inlet channel 26 and the outlet channel 28 are in fluid communication with the hollow space 24. More precisely, the inlet channel 26 comprises an inlet port 30 and an outlet port 32; the inlet port 30 may be in fluid communication with neighbouring piping segments or hoses that may be connected to the activation device 10 whereas the outlet port 32 is in fluid communication with the hollow space 24. Accordingly, the outlet channel 28 has an inlet port 34 that is in fluid communication with the hollow space 24 and an outlet port 36 that is in fluid communication with hoses or piping segments that may be connected to the activation device 10. The inlet channel 26 and the outlet channel 28 have a helical shape and a circular cross-section. The inlet channel 26 has a first diameter d₁ and the outlet channel 28 has a second diameter d₂. The first diameter d₁ is decreasing from the inlet port 30 to the outlet port 32 whereas the second diameter d₂ is increasing from the inlet port 34 to the outlet port 36.

Beyond that, the activation device 10 further comprises a temperature control unit 38 for regulating the temperature in the hollow space 24.

The activation device 10 is symmetrical with respect to a central point P_{c} so that the first and second elongate portions 16, 18 together with the inlet channel 26 and the outlet channel 28 have the same geometrical properties.

For use the inlet channel 26 is connected to a hose or a pipe that delivers a given liquid like water or an aqueous solution to the activation device 10 by means of the first thread 20. The same is true for the outlet channel 28. However, it may not be necessary to connect the outlet channel 28 to a hose or a pipe since the outlet channel 28 may serve as an open mouth, e.g., when the inlet channel 26 is connected to a water tap.

After having established the needed connections a flow of the liquid to be processed is started, e.g., by initiating a pump. The direction of flow of the liquid is indicated by the arrow A. The liquid enters the activation device 10 via the inlet port 30 of the inlet channel 26. Due to the helical shape of the inlet channel 26 an angular momentum is imposed to the liquid. Moreover, the flow rate of the liquid is increased due to the decreasing diameter d₁ of the inlet channel 26 such that kinetic energy of the liquid is increased. The flow rate is at its maximum when the liquid enters the hollow space 24 via the outlet port 32. Due to the spherical shape of the hollow space 24 and the angular momentum the liquid is performing a rotational movement and will be pressed against the wall of the hollow space 24 resulting in a pressure gradient having its minimum in the centre of the hollow space 24 and increasing radially outwardly. Thus, a vortex is built up and conditions similar to a cyclone are generated. Depending on the liquid processed, the lower pressure in the centre will provoke an evaporation of the liquid generating bubbles that are then sucked into the remaining liquid where the liquid condenses again due to the increasing pressure thereby eliminating the bubbles. The generation and elimination of bubbles can be described as a cavitation process. The hollow space 24 thus acts as a cavitation chamber, the majority of the evaporation processes taking place in the centre of the hollow space 24. There is no need for providing means to provoke the cavition process, e.g., devices producing ultrasonic. The constant evaporation and condensation leads to a strong interaction of the molecules and components of the liquid resulting in an intense mixing. Evaporation may be increased by introducing heat into the liquid by means of the temperature control unit 38. The temperature control unit 38 may comprise a resistance to which an electrical current is applied. Alternatively, the temperature control unit 38 may comprise a channel through which a cooling or heating liquid is pumped. Sensors measuring the current temperature within the hollow space 24 and a control element comparing the current temperature and the set temperature may be employed. According to the result of the comparison between the measured current and the set temperature, the control element may activate or inactivate the temperature control unit 38.

After having been mixed the liquid exits the hollow space 24 via the inlet port 34 of the outlet channel 28. As the second diameter d₂ of the outlet channel 28 is increasing from the inlet port 34 to the outlet port 36 the flow rate is reduced. Due to the symmetrical design of the activation device 10 the liquid exits the outlet channel 28 with the same flow rate as it enters the inlet channel 26. Moreover, the direction of flow of the liquid flowing through the activation device 10 may be changed so that the inlet channel 26 functions as the outlet channel 28 and vice versa. The effect on the liquid remains unchanged.

### Reference list

- 10: activation device
- 12: base body
- 14: central part
- 16: first elongate portion
- 18: second elongate portion
- 20: first thread
- 22: second thread
- 24: hollow space
- 26: inlet channel
- 28: outlet channel
- 30: inlet port
- 32: outlet port
- 34: inlet port
- 36: outlet port
- 38: temperature control unit
- A: Arrow
- A_{L}: longitudinal axis
- d₁: first diameter
- d₂: second diameter
- P_{c}: central point

## Claims

1. Activation device for activating a liquid, comprising
- a base body (12) having a central part (14) and a first elongate portion (16) and a second elongate portion (18) protruding from the central part (14),
- a hollow space (24) located in the central part (14),
- an inlet channel (26) provided in the first elongate portion (16) in communication with the hollow space (24) for conducting the liquid into the hollow space (24), and
- an outlet channel (28) provided in the second elongate portion (18) in communication with the hollow space (24) for conducting the liquid out of the hollow space (24), wherein the inlet channel (26) and/or the outlet channel (28) have a helical shape.

2. Activation device according to claim 1,
**characterised in that** the inlet channel (26) has an inlet port (30) and an outlet port (32), the outlet port (32) leading to the hollow space (24), wherein the inlet channel (26) has a circular cross-section with a first diameter (d₁) that is decreasing from the inlet port (30) to the outlet port (32).

3. Activation device according to claim 1 or 2,
**characterised in that** the outlet channel (28) has an inlet port (34) and an outlet port (36), the inlet port (34) starting from the hollow space (24), wherein the outlet channel (28) has a circular cross-section with a second diameter (d₂) that is increasing from the inlet port (34) to the outlet port (36).

4. Activation device according to any of the preceding claims,
**characterised in that** the hollow space (24) has a spherical shape.

5. Activation device according to any of the preceding claims,
**characterised by** a temperature control unit (38) for changing the temperature in the hollow space (24).

6. Activation device according to any of the preceding claims,
**characterised in that** the first elongate portion (16) is provided with a first thread at its distal end and/or that the second elongate portion (18) is provide with a second thread at its distal end.

7. Activation device according to any of the preceding claims,
**characterised in that** the activation device is symmetrical with respect to a central point (P_{c}).

8. Activation device according to any of the preceding claims,
**characterised in that** the activation device consists of plastics or comprises plastics.
